# EUROPEAN PATENT APPLICATION

(11) **EP 4 492 893 A1**
(43) Date of publication of application: **15.01.2025**
(21) Application number: 22930327.6
(22) Date of filing: 11.03.2022
(51) Int. Cl.: H04W 72/04

(54) **INTERFERENCE INFORMATION REPORTING METHOD AND APPARATUS, AND FREQUENCY RANGE DETERMINATION METHOD AND APPARATUS**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2022/080334
(87) International publication number: WO 2023/168689

(57) **Abstract**

The present disclosure relates to an interference information reporting method and apparatus, and a frequency range determination method and apparatus. The interference information reporting method comprises: determining a condition which satisfies the transmission of interference information; and transmitting the interference information to a network device, wherein the interference information comprises information of a frequency range involved in a frequency interference problem. According to the present disclosure, since a terminal reports the information in the interference information containing the frequency range involved in the frequency interference problem to the network device, as opposed to the reported interference information only comprising a center frequency point, the network device can accurately determine the frequency range at which interference occurs, so that the network device can accurately solve the frequency interference problem.

## Description

### TECHNICAL FIELD

The disclosure relates to the field of communication technologies, in particularly to a method for reporting interference information, an apparatus for reporting interference information, a method for determining a frequency range, an apparatus for determining a frequency range, a communication device, and a computer-readable storage medium.

### BACKGROUND

Due to requirements of different networks and services, a same user equipment (UE) may be equipped with various wireless transceivers, for example, wireless transceivers of various radio access technologies (RATs), such as 4-th generation (4G) long term evolution (LTE), 5G new radio (NR), wireless fidelity (WIFI), Bluetooth (BT), and a global navigation satellite system (GNSS).

A frequency for receiving a signal by a wireless receiver may overlap with a frequency for transmitting a signal by a wireless transmitter. For example, the frequency for receiving a signal and the frequency for transmitting a signal are adjacent frequencies or harmonic frequency portions, and then the wireless receiver may be subject to interference from the wireless transmitter.

Further, the UE may report an existing interference problem to a base station, so that the base station provides a solution to the UE. At present, information of the interference problem that the UE reports to the base station includes a central frequency point subject to interference. For example, an absolute radio frequency channel number (ARFCN) is reported, and a frequency corresponding to the ARFCN is used as a central frequency point.

Since the information of the interference problem reported by the UE only includes the central frequency point, the base station can only determine that the central frequency point is subject to interference in a frequency band according to the information, and when other frequencies in the frequency band are subject to interference, the base station cannot accurately determine a frequency range subject to interference according to the central frequency point reported by the UE.

### SUMMARY

In view of this, embodiments of the disclosure provide a method for reporting interference information, a method for determining a frequency range, an apparatus for reporting interference information, an apparatus for determining a frequency range, a communication device, and a computer-readable storage medium, to resolve technical problems in the related art.

According to a first aspect of embodiments of the disclosure, there is provided a method for reporting interference information. The method is applied to a terminal, and includes: determining that a condition for sending the interference information is met; and sending the interference information to a network device, in which the interference information includes information of a frequency range related to a frequency interference problem.

According to a second aspect of embodiments of the disclosure, there is provided a method for determining a frequency range. The method is applied to a network device, and includes: receiving interference information sent by a terminal, in which the interference information includes information of a frequency range related to a frequency interference problem; and determining the frequency range related to the frequency interference problem in the terminal according to the information of the frequency range.

According to a third aspect of embodiments of the disclosure, there is provided an apparatus for reporting interference information. The apparatus is applied to a terminal, and includes: a processing module, configured to determine that a condition for sending the interference information is met; and a sending module, configured to send the interference information to a network device, in which the interference information includes information of a frequency range related to a frequency interference problem.

According to a fourth aspect of embodiments of the disclosure, there is provided an apparatus for determining a frequency range. The apparatus is applied to a network device, and includes: a receiving module, configured to receive interference information sent by a terminal, in which the interference information includes information of a frequency range related to a frequency interference problem; and a processing module, configured to determine the frequency range related to the frequency interference problem of the terminal according to the information of the frequency range.

According to a fifth aspect of embodiments of the disclosure, there is provided a communication device. The device includes: a processor; and a memory configured to store a computer program. When the computer program is executed by the processor, the method for reporting interference information is implemented.

According to a sixth aspect of embodiments of the disclosure, there is provided a communications device. The device includes: a processor; and a memory configured to store a computer program. When the computer program is executed by the processor, the method for determining a frequency range is implemented.

According to a seventh aspect of embodiments of the disclosure, there is provided a computer-readable storage medium storing a computer program. When the computer program is executed by a processor, steps in the method for reporting interference information are implemented.

According to an eighth aspect of embodiments of the disclosure, there is provided a computer-readable storage medium storing a computer program. When the computer program is executed by a processor, steps in the method for determining a frequency range are implemented.

According to embodiments of the disclosure, in response to a condition for sending interference information being met, a terminal may send the interference information to a network device, so as to indicate, to the network device, information of a frequency range related to a frequency interference problem, so that the network device can determine the frequency range related to the frequency interference problem.

Compared with reported interference information only including a central frequency point, the interference information reported by the terminal to the network device includes the information of the frequency range related to the frequency interference problem, which facilitates the network device to accurately determine the frequency range in which interference occurs, thereby facilitating the network device to accurately solve the frequency interference problem.

### BRIEF DESCRIPTION OF THE DRAWINGS

In order to explain the technical solutions in embodiments of the disclosure more clearly, the drawings described in the embodiments will be briefly introduced below. Obviously, the diagrams described as below are only some embodiments of the disclosure. Those skilled in the art may obtain other drawings according to these drawings on the premise of not involving any inventive effort.
FIG. 1 is a schematic flowchart illustrating a method for reporting interference information according to an embodiment of the disclosure.
FIG. 2 is a schematic flowchart illustrating another method for reporting interference information according to an embodiment of the disclosure.
FIG. 3 is a schematic flowchart illustrating a method for determining a frequency range according to an embodiment of the disclosure.
FIG. 4 is a schematic flowchart illustrating another method for determining a frequency range according to an embodiment of the disclosure.
FIG. 5 is a block diagram illustrating an apparatus for reporting interference information according an embodiment of the disclosure.
FIG. 6 is a block diagram illustrating an apparatus for determining a frequency range according to an embodiment of the disclosure.
FIG. 7 is a block diagram illustrating a device for determining a frequency range according to an embodiment of the disclosure.
FIG. 8 is a block diagram illustrating a device for reporting interference information according to an embodiment of the disclosure.

### DETAILED DESCRIPTION

The technical scheme in embodiments of the disclosure will be described clearly and completely in combination with the appended drawings in embodiments of the disclosure. It is obvious that the embodiments described are only a part of embodiments in the disclosure, rather than the whole embodiments. On the basis of embodiments of the disclosure, all other embodiments obtained by those skilled in the art without creative work are within the protection scope of the disclosure.

The terms described in the disclosure are only for the purpose of describing specific embodiments and are not intended to limit the embodiments of the disclosure. The singular forms "a", "an" and "this" used in the embodiments of the disclosure and the attached claim are also intended to include plural forms, unless the context clearly indicates otherwise. It should also be understood that the term "and/or" used in the disclosure means and includes any or all possible combinations of one or more associated listed items.

It should be understood that, although the terms first, second, third, etc. may be used in the embodiments of the disclosure to describe various information, such information shall not be limited to these terms. These terms are only used to distinguish the same type of information. For example, without departing from the scope of this disclosure, first information may also be referred to as second information, and similarly, and second information may also be referred to as first information. It depends on the context. For example, the word "if' as used herein may be interpreted as "in a case that" or "when" or "in response to determining that".

For purposes of brevity and ease of understanding, the terms used herein are "greater than" or "less than", "higher than" or "lower than" when characterizing a size relationship. However, it can be understood by those skilled in the art that the term "greater than" also covers the meaning of "greater than or equal to", the term "less than" also covers the meaning of "less than or equal to", the term "higher than" also covers the meaning of "higher than or equal to", and the term "lower than" also covers the meaning of "lower than or equal to".

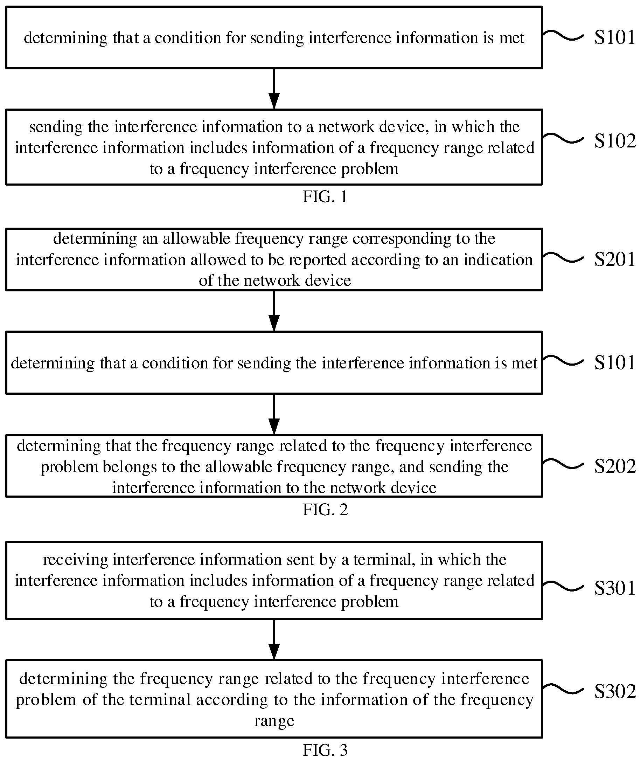

FIG. 1 is a schematic flowchart illustrating a method for reporting interference information according to an embodiment of the disclosure. The method for reporting interference information shown in the embodiment may be applied to the terminal. The terminal includes, but is not limited to, a mobile phone, a tablet computer, a wearable device, a sensor, an Internet of things device, and other communication devices. The terminal (e.g., as a user equipment) may communicate with a network device. The network device includes, but is not limited to, a network device in a communication system such as 4G, 5G, 6G, and the like, such as a base station, a core network, and the like.

As illustrated in FIG. 1, the method for reporting interference information includes the following steps.

At step S101, it is determined that a condition for sending the interference information is met.

At step S102, the interference information is sent to the network device, in which the interference information includes information of a frequency range related to a frequency interference problem.

In an embodiment, the frequency interference problem includes, but is not limited to, interference between a wireless receiver and a wireless transmitter in the terminal, such as in-device coexistence (IDC) interference.

In an embodiment, in response to the condition for sending the interference information being met, the terminal may send the interference information to the network device, so as to indicate, to the network device, the information of the frequency range related to the frequency interference problem, so that the network device may determine the frequency range related to the frequency interference problem.

Compared with reported interference information only including a central frequency point, the interference information reported by the terminal to the network device includes the information of the frequency range related to the frequency interference problem, which facilitates the network device to accurately determine the frequency range in which interference occurs, thereby facilitating the network device to accurately solve the frequency interference problem.

For example, for a frequency band A, a start frequency is f1, an end frequency is f2, and the central frequency point is (f1 + f2)/2. The frequency interference problem occurs in a frequency range from a frequency f3 to a frequency f4 in the frequency band A, where f 1 < f3 < f4 < (f1 + f2)/2.

If the terminal only indicates the central frequency point to the network device, the network device can only determine that the frequency interference problem occurs near (f1 + f2)/2, but actually the frequency interference problem occurs in the frequency range from f3 to f4, which causes the network device not to accurately determine a frequency range where the frequency interference problem occurs in the frequency band A according to the interference information reported by the terminal.

The manner of solving the frequency interference problem by the network device may be instructing the terminal to suspend communication using frequencies near (f1 + f2)/2. However, since the frequency interference problem occurs in the frequency range from f3 to f4, even if the terminal suspends using the frequencies near (f1+f2)/2, there will still be a frequency interference problem as the terminal would still use frequencies within the frequency range from f3 to f4 for communication. That is, the network device cannot accurately solve the frequency interference problem for the terminal.

According to the embodiments, in the interference information reported by the terminal to the network device, the information of the frequency range related to the frequency interference problem may be f3 to f4. Accordingly, the network device can accurately determine that the frequency interference problem occurs in the frequency range from f3 to f4 in the frequency band A.

In this case, the manner of solving the frequency interference problem by the network device may be instructing the terminal to suspend communication using frequencies in the frequency range from f3 to f4. Since for the terminal, the frequency interference problem occurs in the frequency range from f3 to f4, the terminal suspends communication using the frequencies within the frequency range from f3 to f4, which may avoid the frequency interference problem. It can be seen that the network device can accurately solve the frequency interference problem for the terminal.

The manner in which the network device solves the frequency interference problem for the terminal is not limited to instructing the terminal to suspend communication in the frequency range in which the frequency interference problem occurs. There may be other manners to be selected according to needs. For example, the network device itself suspends sending downlink information to the terminal in the frequency range.

It should be noted that the manner in which the terminal sends the interference information to the network device may be set according to a need. For example, the interference information may be sent through radio resource control (RRC) signaling, or may be sent through physical layer information, or may be sent in a random access process, which is not limited in the disclosure.

In an embodiment, the condition includes at least one of:
an occurrence of the frequency interference problem;
stopping of the frequency interference problem; or
an occurrence of a new frequency interference problem.

In an embodiment, the terminal may send the interference information to the network device when the frequency interference problem occurs, so that the network device may determine that the terminal is affected by the frequency interference problem in the frequency range related to the frequency interference problem. Therefore, the frequency interference problem is solved for the terminal. For example, the terminal is instructed to suspend communication using the frequencies in the frequency range.

In an embodiment, when the frequency interference problem stops, the terminal may send the interference information to the network device, so that the network device determines that the frequency interference problem occurred in the frequency range is stopped for the terminal, thereby removing the limitation on the terminal for solving the frequency interference problem. For example, the network device indicates that the terminal may continue communication using the frequencies within the frequency range.

In an embodiment, when a new frequency interference problem occurs, the terminal may send the interference information to the network device, in which the interference information may include information of a frequency range related to the new frequency interference problem, so that the network device determines that the terminal is affected by a frequency interference problem in a new frequency range related to the new frequency interference problem. Therefore, the frequency interference problem is solved for the terminal. For example, the terminal is instructed to suspend communication using frequencies within the new frequency range.

In an embodiment, the information of the frequency range includes at least one of:
a frequency range in which interference occurs; or
a frequency range combination in which interference occurs.

The frequency range in which interference occurs includes at least one of a frequency range causing interference or a frequency range subject to interference.

In an embodiment, the frequency interference problem occurred in the terminal may be that interference occurs between two frequency ranges. For example, a frequency range #1 causes interference to a frequency range #2, and the terminal may report, to the network device, a frequency range in which interference occurs. For example, the terminal reports at least one of the frequency range #1 or the frequency range #2, and may indicate the frequency range causing interference or the frequency range subject to interference in the reported frequency range.

It should be noted that the generated frequency interference problem is interference occurring between at least one pair of frequency ranges, and may be interference occurring between more than one pair of frequency ranges, so that the terminal may report more than one pair of frequency ranges and indicate a relationship between reported frequency ranges.

For example, for the terminal, there are interference caused by a frequency range #1 for a frequency range #2 and interference caused by a frequency range #3 for a frequency range #4 at the same time. Then, frequency ranges in which interference occurs reported by the terminal may include the frequency range #1, the frequency range #2, the frequency range #3, and the frequency range #4. The terminal may indicate that the frequency range #1 and the frequency range #3 are frequency ranges causing interference, the frequency range #2 and the frequency range #4 are frequency ranges subject to interference, the frequency range #1 corresponds to the frequency range #2, and the frequency range #3 corresponds to the frequency range #4. Accordingly, the network device may determine that the frequency range #1 causes interference to the frequency range #2, and the frequency range #3 causes interference to the frequency range #4.

In an embodiment, the occurrence of the frequency interference problem in the terminal may be a common effect of two or more frequency ranges (including but not limited to cross modulation), resulting in causing interference to another frequency range. The terminal may report, to the network device, a frequency range combination in which interference occurs, for example, a frequency range combination in which interference occurs due to the common effect.

For example, a common effect of a frequency range #5 and a frequency range #6 causes interference to a frequency range #7. Then the terminal may report a frequency range combination including the frequency range #5 and the frequency range #6 to the network device, or may report the frequency range #7. Accordingly, the network device may determine that the common effect of the frequency range #5 and the frequency range #6 causes interference to the frequency range #7. A type of the common effect may also be indicated to the network device, for example, a cross modulation.

In an embodiment, the frequency range combination includes more than one frequency range and/or frequency. That is, the frequency range combination at least includes one frequency range.

For example, the frequency range combination may include a frequency range #1 and a frequency #2. The frequency range #1 is a frequency range with a frequency corresponding to ARFCN-1 as a central frequency point and a bandwidth of 20 MHz. The frequency #2 is a frequency corresponding to ARFCN-2.

Alternatively, the frequency range combination may include a frequency range #1 and a frequency range #2. The frequency range #1 is a frequency range with a frequency corresponding to ARFCN-1 as a central frequency point and a bandwidth of 20 MHz. The frequency range #2 is a frequency range with a frequency corresponding to ARFCN-2 as a central frequency point and a bandwidth of 20 MHz.

In an embodiment, the interference information further includes a radio access technology corresponding to the frequency range in which the interference occurs.

In an embodiment, the radio access technology includes at least one of:
a third generation partnership project (3GPP) radio access technology, such as LTE, NR;
a global positioning system (GPS);
a BeiDou system (BDS);
a global navigation satellite system (GNSS);
a wireless local area network (WLAN);
a Galileo positioning system (Galileo);
an Indian regional navigation satellite system (IRNSS); or
bluetooth (BT).

The radio access technology corresponding to the frequency range in which the interference occurs is carried in the interference information, including a radio access technology of the frequency range causing interference and/or a radio access technology of the frequency range subject to interference. For example, the radio access technology of the frequency range causing interference is WLAN, the radio access technology of the frequency range subject to interference is NR. Accordingly, the network device can accurately determine the radio access technology corresponding to the frequency range in which the interference occurs, so as to avoid that the network device is difficult to distinguish radio access technologies corresponding to the frequency ranges when frequency ranges of different radio access technologies overlap. It is beneficial to ensure that the network device accurately solves the frequency interference problem for the terminal according to the radio access technology corresponding to the frequency range.

In an embodiment, a type of the information of the frequency range includes at least one of:
a serial number of a central frequency point and bandwidth information related to the serial number of the central frequency point;
a serial number of a start frequency point and a serial number of an end frequency point;
bandwidth part (BWP) information;
cell information;
cell group information; or
measurement object information.

In an embodiment, when the terminal reports the information of the frequency range to the network device, the terminal may select the type according to a need.

In an embodiment, the serial number of the central frequency point and the bandwidth information related to the serial number of the center frequency point may be reported. The serial number of the center frequency point may be represented by an ARFCN. For example, a reported serial number of the central frequency point is ARFCN-1, a corresponding bandwidth information is 20 M, and the network device may determine that the frequency range is from a frequency obtained by subtracting 10 M from the frequency corresponding to ARFCN-1 to a frequency obtained by adding 10 M to the frequency corresponding to ARFCN-1.

In an embodiment, the serial number of the start frequency point and the serial number of the end frequency point may be reported. The serial number of the start frequency point and the serial number of the end frequency point may be represented by ARFCNs. For example, a reported serial number of a start frequency point is ARFCN-1, a serial number of an end frequency point is ARFCN-2. Accordingly, the network device may determine that the frequency range is from the frequency corresponding to ARFCN-1 to the frequency corresponding to ARFCN-2.

In an embodiment, the BWP information, for example, a BWP identifier (serial number), may be reported. The network device may determine a corresponding BWP based on the BWP information, and may determine a central frequency point f1 and a bandwidth 2Wi corresponding to the BWP, so that the network device determines that a frequency range is from f1 - W₁ to f1 + W₁.

For example, the cell information may be reported, such as, a cell identifier (serial number). The network device may determine a corresponding cell based on the cell identifier, and may further determine a central frequency point f2 and a bandwidth 2W₂ configured for the cell, so that the network device determines that the frequency range is from f2 - W₂ to f2 + W₂.

In an embodiment, the cell group information, for example, a master cell group (MCG) or a secondary cell group (SCG), may be reported. The network device may determine, based on the cell group information, a central frequency point f3 and a bandwidth 2W₃ that are configured to a corresponding cell group, so as to determine that the frequency range is from f3 - W₃ to f3 + W3.

In an embodiment, the measurement object information, for example, an identifier (serial number) of a measurement object may be reported. The network device may determine, based on the measurement object information, a central frequency point f4 and a bandwidth 2W₄ configured for the corresponding measurement object, so as to determine that the frequency range is from f4 - W₄ to f4 + W₄.

In an embodiment, when the type includes at least one of the BWP information, the cell information, the cell group information, or the measurement object information, the information of the frequency range further carries start frequency information and/or end frequency information of the frequency range.

In response to the type of the information of the frequency range reported by the terminal to the network device including at least one of the BWP information, the cell information, the cell group information, or the measurement object information, a frequency range determined according to these types of information is relatively fixed. For example, a frequency range is determined according to a central frequency point and a bandwidth in the foregoing embodiments.

In the embodiments, the start frequency information and/or the end frequency information of the frequency range may be further carried in the information of the frequency range, so that after a frequency range is determined according to the central frequency point and the bandwidth, the network device can further determine, according to the start frequency information and/or the end frequency information, a more accurate frequency range from the frequency range.

For example, if the type of the information of the frequency range reported by the terminal to the network device is the cell information, the network device may determine a corresponding cell based on the cell identifier, and then determine the central frequency point f2 and the bandwidth 2W₂ configured for the cell, so as to determine that the frequency range is from f2 - W₂ to f2 + W₂. The information of the frequency range further carries a start frequency f5 and an end frequency f6 of the frequency range, in which f5 and f6 belong to the frequency range, so that a frequency range from f5 to f6 may be further determined in f2 - W₂ to f2 + W₂.

In an embodiment, the start frequency information includes a serial number of a start frequency point or a serial number of a start physical resource block (PRB); and/or the end frequency information includes a serial number of an end frequency point or a serial number of an end PRB.

The start frequency information and the end frequency information may be represented by serial numbers of frequency points, or may be represented by serial numbers of PRBs.

When the start frequency information and the end frequency information are represented by the serial numbers of frequency points, for example, the serial number of the start frequency point may be ARFCN-1, the serial number of the end frequency point may be ARFCN-2, then the start frequency point is a frequency point corresponding to ARFCN-1, and the end frequency point is a frequency point corresponding to ARFCN-2.

When the start frequency information and the end frequency information are represented by the serial numbers of PRBs, for example, the serial number of the start frequency point may be PRB-1, the serial number of the end frequency point may be PRB-2, then the start frequency point is a frequency point (for example, a start frequency position or an end frequency position of PRB-1) corresponding to PRB-1, and the ending frequency point is a frequency point (for example, a start frequency position or an end frequency position of PRB-2) corresponding to PRB-2.

One PRB corresponds to 12 sub-carriers, and a bandwidth of each sub-carrier may be determined according to a sub-carrier spacing (SCS). A bandwidth corresponding to one PRB is a bandwidth of 12 sub-carriers.

In an embodiment, the information of the frequency range further carries SCS information corresponding to the frequency range, for example, a size of the SCS, such as 15KHz, 30KHz, 60KHz, 120KHz, and the like, which may be indicated by using a parameter set identifier, so that the network device determines the bandwidth corresponding to the PRB based on the size of the SCS.

In an embodiment, the bandwidth information includes at least one of: a bandwidth or a number of PRBs.

The bandwidth information may be directly indicated by the bandwidth, for example, 10M, 20M, and the like, or may be represented by the number of PRBs, for example, a bandwidth corresponding to each PRB may be determined, and then a bandwidth corresponding to the PRBs is determined according to the number of PRBs.

In an embodiment, in a case that the bandwidth information includes a number n of PRBs:
in response to n being equal to 1, the information of the frequency range is used to indicate a frequency range starting from the central frequency point and having a bandwidth corresponding to the PRB, or is used to indicate a frequency range ending at the central frequency point and having the bandwidth corresponding to the PRB;
in response to n being an even number, the information of the frequency range is used to indicate a frequency range taking the central frequency point as a midpoint and having a bandwidth corresponding to the n PRBs; and
in response to n being an odd number greater than 1, the information of the frequency range is used to indicate a frequency range taking the central frequency point as a midpoint and having the bandwidth corresponding to n PRBs, or is used to indicate that a frequency range starting from a frequency point obtained by subtracting a bandwidth corresponding to a certain number of PRBs from the central frequency point and having a bandwidth corresponding to the n PRBs, where the certain number is a rounding value of n/2.

In an embodiment, when the number n of PRBs has different values, indicated frequency ranges may be different, and manners in which the network device determines the frequency range based on reported information of the terminal may also be different.

For example, when n is equal to 1, the start frequency position (or the end frequency position) of the PRB may be used as the central frequency point. For example, the start frequency position is 2.5GHz, the SCS corresponding to the PRB is 15 KHz, and the bandwidth determined according to the SCS is 100M.

In this case, 2.5GHz may be used as a start point, the continuous 100M is used as the indicated frequency range, that is, the frequency range is 2.5GHz to 2.5GHz+100M. Alternatively, 2.5GHz may be used as an end point, the continuous 100M is used as the indicated frequency range, that is, the frequency range is 2.5GHz-100 M to 2.5GHz.

For example, when n is an even number, a central frequency position of the n PRBs may be used as the central frequency point. For example, n = 4, the central frequency of 4 PRBs are 2.5GHz, the SCS corresponding to the PRB is 15KHz, and the bandwidth determined according to the SCS is 100M. Then, it may be determined that the frequency range is from 2.5GHz-200M to 2.5GHz+200M.

For example, when n is an odd number greater than 1, the central frequency position of the n PRBs may be used as the central frequency point. For example, n = 3, a central frequency of the 3 PRBs is 2.5GHz, the SCS corresponding to the PRB is 15KHz, and the bandwidth determined according to the SCS is 100M. Then, it may be determined that the frequency range is from 2.5GHz-150M to 2.5GHz+150M.

When the bandwidth corresponding to the PRB is 100M, a bandwidth of 300M corresponding to the 3 PRBs is divisible by 2. However, there may be some cases that a bandwidth corresponding to the n PRBs is not divisible by 2. For example, a bandwidth corresponding to the PRB is 55M, then 165/2M is not an integer, which may cause some problems during the processing.

Therefore, n/2 may be rounded, including but not limited to ceiling or floor. For example, in the case that n=3, a ceiling value of 3/2 is 2, and a floor value of 3/2 is 1. For example, when the start frequency position of the frequency range is calculated, floor is performed, when the end frequency position of the frequency range is calculated, ceiling is performed, and a determined frequency range may be from 2.5GHz-200M to 2.5GHz+400M. For example, when the start frequency position of the frequency range is calculated, ceiling is performed, when the end frequency position of the frequency range is calculated, floor is performed, and a determined frequency range may be 2.5GHz-400M to 2.5GHz+200M.

It should be noted that whether a rounding mode is floor or ceiling, may be indicated to the terminal by the network device, or may be agreed in advance by the network device and the terminal, or may be determined according to a protocol. Therefore, it is ensured that the network device and the terminal have the same understanding of the rounding mode, thereby ensuring that the frequency range indicated by the terminal is the same as the frequency range determined by the network device.

FIG. 2 is a schematic flowchart illustrating another method for reporting interference information according to an embodiment of the disclosure. As illustrated in FIG. 2, the method further includes the following step.

At step S201, an allowable frequency range corresponding to the interference information allowed to be reported is determined according to an indication of the network device.

Sending the interference information to the network device includes:
at step S202, determining that the frequency range related to the frequency interference problem belongs to the allowable frequency range, and sending the interference information to the network device.

In an embodiment, since the terminal communicates based on different radio access technologies, a large frequency range is involved. Therefore, there are also many central frequency points corresponding to the ARFCNs. Since the network device does not know at which central frequency points the terminal may experience the frequency interference problem, when configuring resources for reporting ARFCNs to the terminal, the network device needs to configure a large amount of resources for the terminal to report a variety of ARFCNs, so that the terminal can report an ARFCN corresponding to any central frequency point within a frequency range available for communication, which occupies a relatively large amount of uplink communication resources.

According to the embodiments, the network device may limit a frequency range corresponding to the interference information reported by the terminal, for example, by indicating the terminal that the terminal is only allowed to report the interference information in the allowable frequency range. That is, when the frequency interference problem occurs in the allowable frequency range, the terminal can report the interference information. Accordingly, the terminal sends the interference information to the network device when the frequency range related to the frequency interference problem belongs to the allowable frequency range, and the interference information is not sent to the network device when the frequency range related to the frequency interference problem does not belong to the allowable frequency range.

Based on this, a central frequency point corresponding to an ARFCN reported by the terminal also belongs to the allowable frequency range. Therefore, the network device only needs to configure a small amount of resources according to the allowed frequency range for the terminal to report the ARFCN, but does not need to configure the resources according to all frequency bands that can be used by the terminal for the terminal to report the ARFCN, which is beneficial to saving communication resources.

FIG. 3 is a schematic flowchart illustrating a method for determining a frequency range according to an embodiment of the disclosure. The method for determining a frequency range shown in this embodiment may be applied to a network device. The network device may communicate with a terminal. The network device includes, but is not limited to, a base station in a communication system such as a 4G base station, a 5G base station, and a 6G base station. The terminal includes, but is not limited to, a mobile phone, a tablet computer, a wearable device, a sensor, an Internet of Things device, and the like.

As illustrated in FIG. 3, the method for determining a frequency range includes the following steps.

At step S301, interference information sent by the terminal is received, in which the interference information includes information of a frequency range related to a frequency interference problem.

At step S302, the frequency range related to the frequency interference problem of the terminal is determined according to the information of the frequency range.

In an embodiment, the frequency interference problem includes, but is not limited to, interference between a wireless receiver and a wireless transmitter in the terminal, such as IDC interference.

In an embodiment, in response to a condition for sending the interference information being met, the terminal may send the interference information to the network device, so as to indicate, to the network device, the information of the frequency range related to the frequency interference problem, so that the network device may determine the frequency range related to the frequency interference problem.

Compared with reported interference information only including a central frequency point, the interference information reported by the terminal to the network device includes the information of the frequency range related to the frequency interference problem, which facilitates the network device to accurately determine the frequency range in which interference occurs, thereby facilitating the network device to accurately solve the frequency interference problem.

For example, for a frequency band A, a start frequency is f1, an end frequency is f2, and the central frequency point is (f1 + f2)/2. The frequency interference problem occurs in a frequency range from the frequency f3 to the frequency f4 in the frequency band A, where f1 < f3 < f4 < (f1 + f2)/2.

If the terminal only indicates the central frequency point to the network device, the network device can only determine that the frequency interference problem occurs near (f1 + f2)/2, but actually the frequency interference problem occurs in the frequency range from f3 to f4, which causes the network device not to accurately determine a frequency range in which the frequency interference problem occurs in the frequency band A according to the interference information reported by the terminal.

The manner of solving the frequency interference problem by the network device may be instructing the terminal to suspend communication using frequencies near (f1 + f2)/2. However, since the frequency interference problem occurs in the frequency range from f3 to f4, even if the terminal suspends using the frequencies near (f1+f2)/2, there will still be a frequency interference problem as the terminal would still use frequencies within the frequency range from f3 to f4 for communication. That is, the network device cannot accurately solve the frequency interference problem for the terminal.

According to the embodiments, in the interference information reported by the terminal to the network device, the information of the frequency range related to the frequency interference problem may be f3 to f4. Accordingly, the network device may accurately determine that the frequency interference problem occurs in the frequency range from f3 to f4 in the frequency band A.

In this case, the manner of solving the frequency interference problem by the network device may be instructing the terminal to suspend communication using frequencies in the frequency range from f3 to f4. Since for the terminal, the frequency interference problem occurs in the frequency range from f3 to f4, the terminal suspends communication using the frequencies within the frequency range from f3 to f4, which may avoid the frequency interference problem. It can be seen that the network device can accurately solve the frequency interference problem for the terminal.

The manner in which the network device solves the frequency interference problem for the terminal is not limited to instructing the terminal to suspend communication in the frequency range in which the frequency interference problem occurs. There may be other manners to be selected according to needs. For example, the network device itself suspends sending downlink information to the terminal in the frequency range.

It should be noted that the manner in which the terminal sends the interference information to the network device may be set according to a need. For example, the interference information may be sent through RRC signaling, or may be sent through physical layer information, or may be sent in a random access process, which is not limited in the disclosure.

In an embodiment, the terminal sends the interference information in response to at least one of the following conditions being met:
an occurrence of the frequency interference problem;
stopping of the frequency interference problem; or
an occurrence of a new frequency interference problem.
In an embodiment, the information of the frequency range includes at least one of:
a frequency range in which interference occurs; or
a frequency range combination in which interference occurs.

The frequency range in which interference occurs includes at least one of a frequency range causing interference or a frequency range subject to interference.

In an embodiment, the frequency interference problem occurred in the terminal may be that interference occurs between two frequency ranges. For example, a frequency range #1 causes interference to a frequency range #2, and the terminal may report, to the network device, a frequency range in which interference occurs. For example, the terminal reports at least one of the frequency range #1 or the frequency range #2, and may indicate the frequency range causing interference or the frequency range subject to interference in the reported frequency range. Based on this, the network device may determine the frequency range in which interference occurs, as well as which frequency range in the received frequency ranges is causing interference and which is subject to interference.

It should be noted that the generated frequency interference problem is interference occurring between at least one pair of frequency ranges, and may be interference occurring between more than one pair of frequency ranges, so that the terminal may report more than one pair of frequency ranges and indicate a relationship between reported frequency ranges.

For example, for the terminal, there are interference caused by a frequency range #1 for a frequency range #2 and interference caused by a frequency range #3 for a frequency range #4 at the same time. Then, frequency ranges in which interference occurs reported by the terminal may include the frequency range #1, the frequency range #2, the frequency range #3, and the frequency range #4. The terminal may indicate that the frequency range #1 and the frequency range #3 are frequency ranges causing interference, the frequency range #2 and the frequency range #4 are frequency ranges subject to interference, the frequency range #1 corresponds to the frequency range #2, and the frequency range #3 corresponds to the frequency range #4. Accordingly, the network device may determine that the frequency range #1 causes interference to the frequency range #2, and the frequency range #3 causes interference to the frequency range #4.

In an embodiment, the occurrence of the frequency interference problem in the terminal may be a common effect of two or more frequency ranges (including but not limited to cross modulation), resulting in causing interference to another frequency range. The terminal may report, to the network device, a frequency range combination in which interference occurs, for example, a frequency range combination in which interference occurs due to the common effect.

For example, a common effect of a frequency range #5 and a frequency range #6 causes interference to a frequency range #7. Then the terminal may report a frequency range combination including the frequency range #5 and the frequency range #6 to the network device, or may report the frequency range #7. Accordingly, the network device may determine that the common effect of the frequency range #5 and the frequency range #6 causes interference to the frequency range #7. A type of the common effect may also be indicated to the network device, for example, a cross modulation. Based on this, the network device may determine the frequency range in which interference occurs, as well as which frequency range in the received frequency ranges is causing interference and which is subject to interference, and may determine the type of the common effect of the frequency range combination causing interference.

In an embodiment, the frequency range combination includes more than one frequency range and/or frequency. That is, the frequency range combination at least includes one frequency range.

For example, the frequency range combination may include a frequency range #1 and a frequency #2. The frequency range #1 is a frequency range with a frequency corresponding to ARFCN-1 as a central frequency point and a bandwidth of 20 MHz. The frequency #2 is a frequency corresponding to ARFCN-2.

Alternatively, the frequency range combination may include a frequency range #1 and a frequency range #2. The frequency range #1 is a frequency range with a frequency corresponding to ARFCN-1 as a central frequency point and a bandwidth of 20 MHz. The frequency range #2 is a frequency range with a frequency corresponding to ARFCN-2 as a central frequency point and a bandwidth of 20 MHz.

In an embodiment, the interference information further includes a radio access technology corresponding to the frequency range in which the interference occurs.

In an embodiment, the radio access technology includes at least one of:
a 3GPP radio access technology;
a GPS;
a BDS;
a GNSS;
a WLAN;
a Galileo;
an IRNSS; or
a BT.

The radio access technology corresponding to the frequency range in which the interference occurs is carried in the interference information, including a radio access technology of the frequency range causing interference and/or a radio access technology of the frequency range subject to interference. For example, the radio access technology of the frequency range causing interference is WLAN, the radio access technology of the frequency range subject to interference is NR. Accordingly, the network device can accurately determine the radio access technology corresponding to the frequency range in which the interference occurs, so as to avoid that the network device is difficult to distinguish radio access technologies corresponding to frequency ranges when frequency ranges of different radio access technologies overlap. It is beneficial to ensure that the network device accurately solves the frequency interference problem for the terminal according to the radio access technology corresponding to the frequency range.

In an embodiment, a type of the information of the frequency range includes at least one of:
a serial number of a central frequency point and bandwidth information related to the serial number of the central frequency point;
a serial number of a start frequency point and a serial number of an end frequency point;
BWP information;
cell information;
cell group information; or
measurement object information.

In an embodiment, when the terminal reports the information of the frequency range to the network device, the terminal may select the type according to a need.

In an embodiment, the serial number of the central frequency point and the bandwidth information related to the serial number of the central frequency point may be reported. The serial number of the central frequency point may be represented by an ARFCN. For example, a reported serial number of the central frequency point is ARFCN-1, the corresponding bandwidth information is 20 M, and the network device may determine that the frequency range is from a frequency obtained by subtracting 10 M from the frequency corresponding to ARFCN-1 to a frequency obtained by adding 10 M to the frequency corresponding to ARFCN-1.

In an embodiment, the serial number of the start frequency point and the serial number of the end frequency point may be reported. The serial number of the start frequency point and the serial number of the end frequency point may be represented by ARFCNs. For example, a reported serial number of a start frequency point is ARFCN-1, a serial number of an end frequency point is ARFCN-2. Accordingly, the network device may determine that the frequency range is from the frequency corresponding to ARFCN-1 to the frequency corresponding to ARFCN-2.

In an embodiment, the BWP information, for example, a BWP identifier (serial number), may be reported. The network device may determine a corresponding BWP based on the BWP information, and may determine a central frequency point f1 and a bandwidth 2Wi corresponding to the BWP, so that the network device determines that a frequency range is from f1 - W₁ to f1 + W₁.

For example, the cell information may be reported, such as, a cell identifier (serial number). The network device may determine a corresponding cell based on the cell identifier, and may further determine a central frequency point f2 and a bandwidth 2W₂ configured for the cell, so that the network device determines that the frequency range is from f2 - W₂ to f2 + W₂.

In an embodiment, the cell group information, for example, a master cell group (MCG) or a secondary cell group (SCG) may be reported. The network device may determine, based on the cell group information, a central frequency point f3 and a bandwidth 2W₃ that are configured to a corresponding cell group, so as to determine that the frequency range is from f3 - W₃ to f3 + W3.

In an embodiment, the measurement object information, for example, an identifier (serial number) of a measurement object may be reported. The network device may determine, based on the measurement object information, a central frequency point f4 and a bandwidth 2W₄ configured for the corresponding measurement object, so as to determine that the frequency range is from f4 - W₄ to f4 + W₄.

In an embodiment, when the type includes at least one of the BWP information, the cell information, the cell group information, or the measurement object information, the information of the frequency range further carries start frequency information and/or end frequency information of the frequency range.

When the type of the information of the frequency range reported by the terminal to the network device includes at least one of the BWP information, the cell information, the cell group information, or the measurement object information, a frequency range determined according to these types of information is relatively fixed. For example, a frequency range is determined according to a central frequency point and a bandwidth in the foregoing embodiments.

In the embodiments, the start frequency information and/or the end frequency information of the frequency range may be further carried in the information of the frequency range, so that after a frequency range is determined according to the central frequency point and the bandwidth, the network device can further determine, according to the start frequency information and/or the end frequency information, a more accurate frequency range from the frequency range.

For example, if the type of the information of the frequency range reported by the terminal to the network device is the cell information, the network device may determine a corresponding cell based on the cell identifier, and then determine the central frequency point f2 and the bandwidth 2W₂ configured for the cell, so as to determine that the frequency range is from f2 - W₂ to f2 + W₂. The information of the frequency range further carries a start frequency f5 and an end frequency f6 of the frequency range, in which f5 and f6 belong to the frequency range, so that a frequency range from f5 to f6 may be further determined in f2 - W₂ to f2 + W₂.

In an embodiment, the information of the frequency range further carries sub-carrier spacing information corresponding to the frequency range.

In an embodiment, the start frequency information includes a serial number of a start frequency point or a serial number of a start PRB; and/or the end frequency information includes a serial number of an end frequency point or a serial number of an end PRB.

The start frequency information and the end frequency information may be represented by serial numbers of frequency points, or may be represented by serial numbers of PRBs.

When the start frequency information and the end frequency information are represented by the serial numbers of frequency points, for example, the serial number of the start frequency point may be ARFCN-1, the serial number of the end frequency point may be ARFCN-2, then the start frequency point is a frequency point corresponding to ARFCN-1, and the end frequency point is a frequency point corresponding to ARFCN-2.

When the start frequency information and the end frequency information are represented by the serial numbers of PRBs, for example, the serial number of the start frequency point may be PRB-1, the serial number of the end frequency point may be PRB-2, then the start frequency point is a frequency point (for example, a start frequency position or an end frequency position of PRB-1) corresponding to PRB-1, and the end frequency point is a frequency point (for example, a start frequency position or an end frequency position of PRB-2) corresponding to PRB-2.

One PRB corresponds to 12 sub-carriers, and a bandwidth of each sub-carrier may be determined according to a SCS. A bandwidth corresponding to one PRB is a bandwidth of 12 sub-carriers.

In an embodiment, the information of the frequency range further carries SCS information corresponding to the frequency range, for example, a size of the SCS, such as 15KHz, 30KHz, 60KHz, 120KHz, and the like, which may be indicated by using a parameter set identifier, so that the network device determines the bandwidth corresponding to the PRB based on the size of the SCS.

In an embodiment, the bandwidth information includes at least one of: a bandwidth and a number of PRBs.

The bandwidth information may be directly indicated by the bandwidth, for example, 10M, 20M, and the like, or may be represented by the number of PRBs, for example, a bandwidth corresponding to each PRB may be determined, and then a bandwidth corresponding to the number of PRBs is determined according to the number of PRBs.

In an embodiment, in a case that the bandwidth information includes a number n of PRBs:
in response to n being equal to 1, the information of the frequency range is used to indicate a frequency range starting from the central frequency point and having a bandwidth corresponding to the PRB, or is used to indicate a frequency range ending at the central frequency point and having the bandwidth corresponding to the PRB;
in response to n being an even number, the information of the frequency range is used to indicate a frequency range taking the central frequency point as a midpoint and having a bandwidth corresponding to the n PRBs; and
in response to n being an odd number greater than 1, the information of the frequency range is used to indicate a frequency range taking the central frequency point as a midpoint and having the bandwidth corresponding to n PRBs, or is used to indicate that a frequency range starting from a frequency point obtained by subtracting a bandwidth corresponding to a certain number of PRBs from the central frequency point and having a bandwidth corresponding to the n PRBs, where the certain number is a rounding value of n/2.

In an embodiment, when the number n of PRBs has different values, indicated frequency ranges may be different, and manners in which the network device determines the frequency range based on reported information of the terminal may also be different.

For example, when n is equal to 1, the start frequency position (or the end frequency position) of the PRB may be used as the central frequency point. For example, the start frequency position is 2.5GHz, the SCS corresponding to the PRB is 15KHz, and the bandwidth determined according to the SCS is 100M.

In this case, 2.5GHz may be used as a start point, the continuous 100M is used as the indicated frequency range, that is, the frequency range is from 2.5GHz to 2.5GHz +100M. Alternatively, 2.5GHz may be used as an end point, the continuous 100M is used as the indicated frequency range, that is, the frequency range is from 2.5GHz-100M to 2.5GHz.

For example, when n is an even number, a central frequency position of the n PRBs may be used as the central frequency point. For example, n = 4, a central frequency of 4 PRBs are 2.5GHz, the SCS corresponding to the PRB is 15KHz, and the bandwidth determined according to the SCS is 100M. Then, it may be determined that the frequency range is from 2.5GHz-200M to 2.5GHz+200M.

For example, when n is an odd number greater than 1, the central frequency position of the n PRBs may be used as the central frequency point. For example, n = 3, a central frequency of the 3 PRBs is 2.5GHz, the SCS corresponding to the PRB is 15KHz, and the bandwidth determined according to the SCS is 100M. Then, it may be determined that the frequency range is from 2.5GHz-150M to 2.5Ghz+150M.

When the bandwidth corresponding to the PRB is 100M, a bandwidth of 300M corresponding to the 3 PRBs is divisible by 2. However, there may be some cases that a bandwidth corresponding to the n PRBs is not divisible by 2. For example, a bandwidth corresponding to the PRB is 55M, then 165/2M is not an integer, which may cause some problems during the processing.

Therefore, n/2 may be rounded, including but not limited to ceiling and floor. For example, in the case that n = 3, a ceiling value of 3/2 is 2, and a floor value of 3/2 is 1. For example, when the start frequency position of the frequency range is calculated, floor is performed, when the end frequency position of the frequency range is calculated, ceiling is performed, and a determined frequency range may be from 2.5GHz-200M to 2.5GHz+400M. For example, when the start frequency position of the frequency range is calculated, ceiling is performed, when the end frequency position of the frequency range is calculated, floor is performed, and a determined frequency range may be 2.5GHz-400M to 2.5GHz+200M.

It should be noted that whether a rounding mode is floor or ceiling, may be indicated to the terminal by the network device, or may be agreed in advance by the network device and the terminal, or may be determined according to a protocol. Therefore, it is ensured that the network device and the terminal have the same understanding of the rounding mode, thereby ensuring that the frequency range indicated by the terminal is the same as the frequency range determined by the network device.

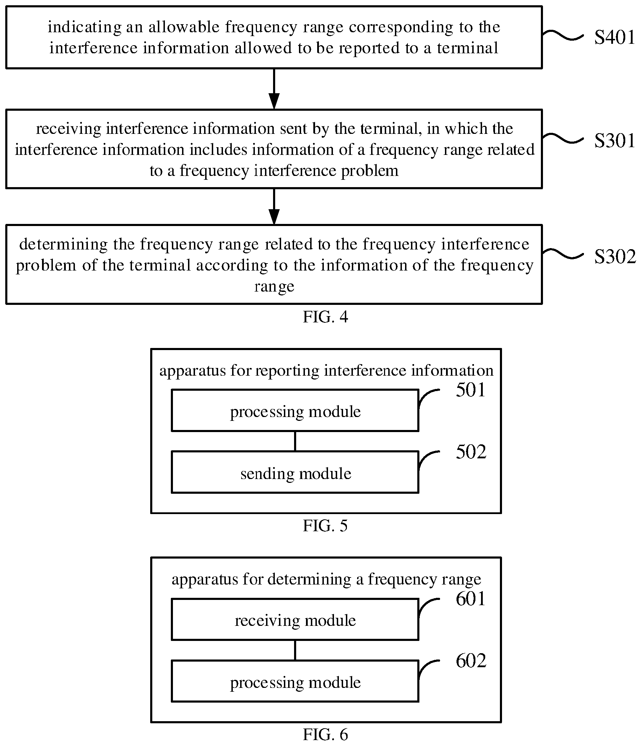

FIG. 4 is a schematic flowchart illustrating another method for determining a frequency range according to an embodiment of the disclosure. As illustrated in FIG. 4, the method further includes the following step.

At step S401, an allowable frequency range corresponding to the interference information allowed to be reported is indicated to the terminal.

In an embodiment, since the terminal communicates based on different radio access technologies, a large frequency range is involved. Therefore, there are also many central frequency points corresponding to the ARFCNs. Since the network device does not know at which central frequency points the terminal may experience the frequency interference problem, when configuring resources for reporting ARFCNs to the terminal, the network device needs to configure a large amount of resources for the terminal to report a variety of ARFCNs, so that the terminal can report an ARFCN corresponding to any central frequency point within a frequency range available for communication, which occupies a relatively large amount of uplink communication resources.

According to the embodiments, the network device may limit a frequency range corresponding to the interference information reported by the terminal, for example, by indicating the terminal that the terminal is only allowed to report the interference information in the allowable frequency range. That is, when the frequency interference problem occurs in the allowable frequency range, the terminal can report the interference information. Accordingly, the terminal sends the interference information to the network device when the frequency range related to the frequency interference problem belongs to the allowable frequency range, and the interference information is not sent to the network device when the frequency range related to the frequency interference problem does not belong to the allowable frequency range.

Based on this, a central frequency point corresponding to an ARFCN reported by the terminal also belongs to the allowable frequency range. Therefore, the network device only needs to configure a small amount of resources according to the allowed frequency range for the terminal to report the ARFCN, but does not need to configure the resources according to all frequency bands that can be used by the terminal for the terminal to report the ARFCN, which is beneficial to saving communication resources.

The disclosure further provides embodiments of an apparatus for reporting interference information and an apparatus for determining a frequency range, which correspond to the method for reporting interference information and the method for determining a frequency range in the above embodiments.

FIG. 5 is a block diagram illustrating an apparatus for reporting interference information according an embodiment of the disclosure. The apparatus for reporting interference information shown in this embodiment may be applied to the terminal. The terminal includes, but is not limited to, a mobile phone, a tablet computer, a wearable device, a sensor, an internet of things device, and other communication devices. The terminal (e.g., as a user equipment) may communicate with a network device. The network device includes, but is not limited to, a network device in a communication system such as 4G, 5G, 6G, and the like, such as a base station, a core network, and the like.

As illustrated in FIG. 5, the apparatus for reporting interference information includes:
a processing module 501, configured to determine that a condition for sending the interference information is met; and
a sending module 502, configured to send the interference information to the network device, in which the interference information includes information of a frequency range related to a frequency interference problem.
In an embodiment, the condition includes at least one of:
an occurrence of the frequency interference problem;
stopping of the frequency interference problem; or
an occurrence of a new frequency interference problem.
In an embodiment, the information of the frequency range includes at least one of:
a frequency range in which interference occurs; or
a frequency range combination in which interference occurs.

In an embodiment, the frequency range combination includes more than one frequency range and/or frequency.

In an embodiment, the interference information further includes a radio access technology corresponding to the frequency range in which the interference occurs.
In an embodiment, the radio access technology includes at least one of:
3GPP radio access technology;
a GPS;
a BDS;
a GNSS;
a WLAN;
a Galileo;
an IRNSS; or
a BT.

In an embodiment, a type of the information of the frequency range includes at least one of:
a serial number of a central frequency point and bandwidth information related to the serial number of the central frequency point;
a serial number of a start frequency point and a serial number of an end frequency point;
BWP information;
cell information;
cell group information; or
measurement object information.

In an embodiment, the information of the frequency range further carries sub-carrier spacing information corresponding to the frequency range.

In an embodiment, when the type includes at least one of the BWP information, the cell information, the cell group information, or the measurement object information, the information of the frequency range further carries start frequency information and/or end frequency information of the frequency range.

In an embodiment, the start frequency information includes a serial number of a start frequency point or a serial number of a start PRB; and/or the end frequency information includes a serial number of an end frequency point or a serial number of an end PRB.

In an embodiment, the bandwidth information includes at least one of:
a bandwidth; or
a number of PRBs.

In an embodiment, in a case that the bandwidth information includes a number n of PRBs:
in response to n being equal to 1, the information of the frequency range is used to indicate a frequency range starting from the central frequency point and having a bandwidth corresponding to the PRB, or is used to indicate a frequency range ending at the central frequency point and having the bandwidth corresponding to the PRB;
in response to n being an even number, the information of the frequency range is used to indicate a frequency range taking the central frequency point as a midpoint and having a bandwidth corresponding to the n PRBs; and
in response to n being an odd number greater than 1, the information of the frequency range is used to indicate a frequency range taking the central frequency point as a midpoint and having a bandwidth corresponding to the n PRBs, or is used to indicate a frequency range starting from a frequency point obtained by subtracting a bandwidth corresponding to a certain number of PRBs from the central frequency point and having a bandwidth corresponding to the n PRBs, where the certain number is a rounding value of n/2.

In an embodiment, the processing module is configured to determine an allowable frequency range corresponding to the interference information allowed to be reported according to an indication of the network device.

The sending module is configured to determine that the frequency range related to the frequency interference problem belongs to the allowable frequency range, and send the interference information to the network device.

FIG. 6 is a block diagram illustrating an apparatus for determining a frequency range according to an embodiment of the disclosure. The apparatus for determining a frequency range shown in this embodiment may be applied to a network device. The network device may communicate with a terminal. The network device includes, but is not limited to, a base station in a communication system such as a 4G base station, a 5G base station, and a 6G base station. The terminal includes, but is not limited to, a mobile phone, a tablet computer, a wearable device, a sensor, an internet of things device, and the like.

As illustrated in FIG. 6, the apparatus for determining a frequency range includes:
a receiving module 601, configured to receive interference information sent by the terminal, in which the interference information includes information of a frequency range related to a frequency interference problem; and
a processing module 602, configured to determine the frequency range related to the frequency interference problem of the terminal according to the information of the frequency range.

In an embodiment, the terminal sends the interference information in response to at least one of the following conditions being met:
an occurrence of the frequency interference problem;
stopping of the frequency interference problem; or
an occurrence of a new frequency interference problem.
In an embodiment, the information of the frequency range includes at least one of:
a frequency range in which interference occurs; or
a frequency range combination in which interference occurs.

In an embodiment, the frequency range combination includes more than one frequency range and/or frequency.

In an embodiment, the interference information further includes a radio access technology corresponding to a frequency range in which the interference occurs.

In an embodiment, the radio access technology includes at least one of:
a 3GPP radio access technology;
a GPS;
a BDS;
a GNSS;
a WLAN;
a Galileo;
an IRNSS; or
a BT.

In an embodiment, a type of the information of the frequency range includes at least one of:

a serial number of a central frequency point and bandwidth information related to the serial number of the central frequency point;
a serial number of a start frequency point and a serial number of an end frequency point;
BWP information;
cell information;
cell group information; or
measurement object information.

In an embodiment, the information of the frequency range further carries sub-carrier spacing information corresponding to the frequency range.

In an embodiment, when the type includes at least one of the BWP information, the cell information, the cell group information, or the measurement object information, the information of the frequency range further carries start frequency information and/or end frequency information of the frequency range.

In an embodiment, the start frequency information includes a serial number of a start frequency point or a serial number of a start PRB; and/or the end frequency information includes a serial number of an end frequency point or a serial number of an end PRB.

In an embodiment, the bandwidth information includes at least one of: a bandwidth or a number of PRBs.

In an embodiment, in a case that the bandwidth information includes a number n of PRBs:
in response to n being equal to 1, the information of the frequency range is used to indicate a frequency range starting from the central frequency point and having a bandwidth corresponding to the PRB, or is used to indicate a frequency range ending at the central frequency point and having a bandwidth corresponding to the PRB;
in response to n being an even number, the information of the frequency range is used to indicate a frequency range taking the central frequency point as a midpoint and having a bandwidth corresponding to the n PRBs; and
in response to n being an odd number greater than 1, the information of the frequency range is used to indicate a frequency range taking the central frequency point as a midpoint and having a bandwidth corresponding to the n PRBs, or is used to indicate that a frequency range starting from a frequency point obtained by subtracting a bandwidth corresponding to a certain number of PRBs from the central frequency point and having a bandwidth corresponding to the n PRBs, where the certain number is a rounding value of n/2.

In an embodiment, the apparatus further includes:
a sending module, configured to indicate an allowable frequency range corresponding to the interference information allowed to be reported to the terminal.

With regard to the apparatus in the above embodiments, the specific way each module performs the operation has been described in detail in the embodiments of the method and will not be elaborated here.

As to the embodiments of the apparatus reference can be made to the description of the embodiments of the method since they basically correspond to the embodiments of the method. The embodiments of the apparatus described above are only schematic, in which the above modules described as separate parts may or may not be physically separated, the parts shown as modules may or may not be physical modules, that is, may be located in one place, or may be distributed on a plurality of network modules. Some or all modules may be selected according to the actual requirements to achieve the purpose of the disclosure. Those skilled in the art may understand and implement it without any creative effort.

A communication device is further proposed in the embodiments of the disclosure, and includes: a processor, and a memory configured to store a computer program. When the computer program is executed by the processor, the method for reporting interference information of any one of the above embodiments is implemented.

A communication device is further proposed in the embodiments of the disclosure, and includes: a processor, and a memory configured to store a computer program. When the computer program is executed by the processor, the method for determining a frequency range of any one of the above embodiments is implemented.

A computer-readable storage medium is further proposed in the embodiments of the disclosure, and is configured to store a computer program. When the computer program is executed by a processor, steps of the method for reporting interference information of any one of the above embodiments are implemented.

A computer-readable storage medium is further proposed in the embodiments of the disclosure, and is configured to store a computer program. When the computer program is executed by a processor, steps of the method for determining a frequency range of any one of the above embodiments are implemented.

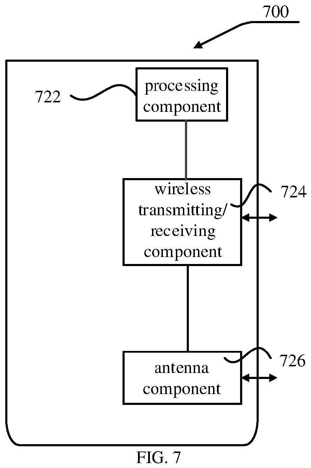

As shown in FIG. 7, FIG. 7 is a block diagram illustrating an apparatus 700 for determining a frequency range according to an embodiment of the disclosure. The apparatus 700 may be provided as a base station. Referring to FIG. 7, the apparatus 700 includes a processing component 722, a wireless transmitting/receiving component 724, an antenna component 726, and a signal processing unit peculiar to a wireless interface, and the processing component 722 may further include one or more processors. A processor of the processing component 722 may be configured to implement the method for determining a frequency range of any one of the above embodiments.

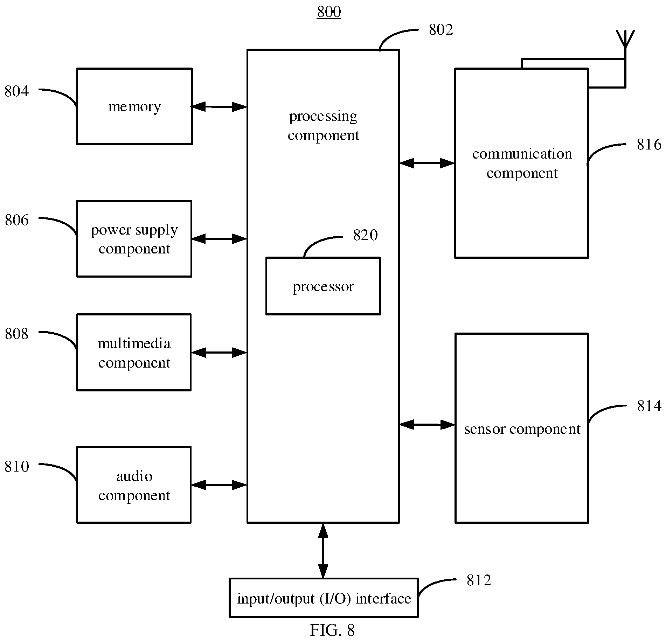

FIG. 8 is a block diagram illustrating an apparatus 800 for reporting interference information according to an embodiment of the disclosure. For example, the apparatus 800 may be a mobile phone, a computer, a digital broadcasting terminal, a messaging device, a game console, a tablet device, a medical equipment, a fitness equipment, a personal digital assistant, and the like.

Referring to FIG. 8, the apparatus 800 may include one or more components: a processing component 802, a memory 804, a power supply component 806, a multimedia component 808, an audio component 810, an input/output (I/O) interface 812, a sensor component 814 and a communication component 816.

The processing component 802 generally controls the whole operation of the apparatus 800, such as the operations related to display, phone call, data communication, camera operation and recording operation. The processing component 802 may include one or more processors 820 to perform instructions, to complete all or part of steps of the above method for reporting interference information. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store all types of data to support the operation of the apparatus 800. Examples of the data include the instructions of any applications or methods operated on the device 800, contact data, phone book data, messages, pictures, videos, etc. The memory 804 may be implemented by any type of volatile or non-volatile storage devices or their combination, such as a stationary random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 may provide power supply for all components of the device 800. The power supply component 806 may include power supply management system, one or more power supplies, and other units related to generating, managing and distributing power for the device 800.

The multimedia component 808 includes an output interface screen provided between the device 800 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of touch or slide action, but also detect the duration and pressure related to the touching or sliding operation. In some embodiments, the multimedia component 808 includes a front camera and/or a rear camera. When the apparatus 800 is in operation mode, such as shooting mode or video mode, the front camera or the rear camera may receive the external multimedia data. Each front camera and rear camera may be a fixed optical lens system or an optical lens system with focal length and optical zoom capacity.

The audio component 810 is configured as an output and/or input signal. For example, the audio component 810 includes a microphone (MIC). When the device 800 is in operation mode, such as call mode, record mode, and speech recognition mode, the microphone is configured to receive the external audio signals. The audio signals received may be further stored in the memory 804 or sent via the communication component 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The buttons may include but not limited to a home button, a volume button, a start button and a lock button.

The sensor component 814 includes one or more sensors, configured to provide various aspects of status assessment for the device 800. For example, the sensor component 814 may detect the on/off state of the device 800 and the relative positioning of the component. For example, the component is a display and a keypad of the device 800. The sensor component 814 may further detect the location change of the device 800 or one component of the device 800, the presence or absence of contact between the user and the device 800, the orientation or acceleration/deceleration of the device 800, and the temperature change of the device 800. The sensor component 814 may include a proximity sensor, which is configured to detect the existence of the objects nearby without any physical contact. The sensor component 814 may further include a light sensor such as CMOS or CCD image sensor, which is configured to use in imaging applications. In some embodiments, the sensor component 814 may further include an acceleration transducer, a gyroscope sensor, a magnetic sensor, a pressure sensor or a temperature sensor.

The communication component 816 is configured for the convenience of wire or wireless communication between the device 800 and other devices. The apparatus 800 may access wireless a network based on communication standard, such as WIFI, 2G or 3G, 4G LTE, 5G NR or their combination. In an illustrative embodiment, the communication component 816 receives broadcast signals or broadcast-related information from an external broadcast management system via a broadcast channel. In an exemplary embodiment, the communication component 816 further includes a near field communication (NFC) module to facilitate short-range communication. For example, an NFC module may be implemented based on radio frequency identification (RFID) technology, infrared data association (IrDA) technology, ultra-wideband (UWB) technology, BT technology and other technologies.

In an exemplary embodiment, the apparatus 800 may be implemented by one or more application specific integrated circuits(ASICs), digital signal processors (DSPs), digital signal processing devices (DSPDs), programmable logic devices (PLDs), field programmable gate arrays (FPGAs), controllers, microcontrollers, microprocessors or other electronics components, which is configured to perform the above method for reporting interference information.

In an example embodiment, a non-temporary computer readable storage medium is further provided which includes instructions, such as the memory 804 including instructions. The instructions may be executed by the processor 820 of the apparatus 800 to complete the above method for reporting interference information. For example, the non-transitory computer readable storage medium may be a ROM, a random access memory (RAM), a CD-ROM, a magnetic tape, a floppy disk, an optical data storage device, etc.

After considering the specification and practicing the disclosure herein, those skilled in the art will easily think of other embodiments of the present application. The present application is intended to cover any variations, usages, or adaptive changes of the present application. These variations, usages, or adaptive changes follow the general principles of the present application and include common knowledge or conventional technical means in the technical field not disclosed by the present application. The description and the embodiments are to be regarded as exemplary only, and the true scope and spirit of the present application are referred to the appended claims.

It should be understood that the disclosure is not limited to the precise structure described above and shown in the drawings, and various modifications and changes may be made without departing from its scope. The scope of the present application is only limited by the appended claims.

It should be noted that relational terms such as first and second are used herein to distinguish one entity or operation from another entity or operation without necessarily requiring or implying any such actual relationship or order between such entities or operations. The terms "comprise", "include" or any other variations thereof, are intended to cover a non-exclusive inclusion, such that a process, a method, an article or a device including a series of elements not only includes those elements but also includes other elements not expressly listed, or may further include elements inherent to such process, method, article, or device. In the absence of more constraints, the elements defined by a sentence "comprising one" do not preclude the presence of additional same elements in the process, method, article, or apparatus that includes the elements.

The above are detailed descriptions of embodiments of the disclosure. Specific examples are applied to elaborate principles and implementations of the disclosure. The descriptions of the above embodiments are only configured to help understand the method and core concepts of the disclosure; at the same time, for those skilled in the art, there may be changes in the specific implementation and application scope according to the idea of the disclosure. In summary, the contents of the summary should not be construed as a limitation of the disclosure.

## Claims

1. A method for reporting interference information, applied to a terminal, comprising:
determining that a condition for sending the interference information is met; and
sending the interference information to a network device, wherein the interference information comprises information of a frequency range related to a frequency interference problem.

2. The method of claim 1, wherein the condition comprises at least one of:
an occurrence of the frequency interference problem;
stopping of the frequency interference problem; or
an occurrence of a new frequency interference problem.

3. The method of claim 1, wherein the information of the frequency range comprises at least one of:
a frequency range where interference occurs; or
a frequency range combination where interference occurs.

4. The method of claim 3, wherein the frequency range combination comprises more than one frequency range and/or frequency.

5. The method of claim 1, wherein the interference information further comprises a radio access technology corresponding to a frequency range where interference occurs.

6. The method of claim 5, wherein the radio access technology comprises at least one of:
a third generation partnership project (3GPP) radio access technology;
a global positioning system (GPS);
a BeiDou system (BDS);
a global navigation system (GNSS);
a wireless local area network (WLAN);
a Galileo positioning system (Galileo);
an Indian regional navigation satellite system (IRNSS); or
bluetooth (BT).

7. The method of claim 1, wherein a type of the information of the frequency range comprises at least one of:
a serial number of a central frequency point and bandwidth information related to the serial number of the central frequency point;
a serial number of a start frequency point and a serial number of an end frequency point;
bandwidth part (BWP) information;
cell information;
cell group information; or
measurement object information.

8. The method of claim 7, wherein the information of the frequency range further carries sub-carrier spacing information corresponding to the frequency range.

9. The method of claim 7, wherein in response to the type comprising at least one of the BWP information, the cell information, the cell group information, or the measurement object information, the information of the frequency range further carries start frequency information and/or end frequency information of the frequency range.

10. The method of claim 9, wherein the start frequency information comprises a serial number of a start frequency point or a serial number of a start physical resource block (PRB); and/or the end frequency information comprises a serial number of an end frequency point or a serial number of an end PRB.

11. The method of claim 7, wherein the bandwidth information comprises at least one of:
a bandwidth; or
a number of PRBs.

12. The method of claim 11, wherein in a case that the bandwidth information comprises a number n of PRBs,
in response to n being equal to 1, the information of the frequency range is used to indicate a frequency range starting from the central frequency point and having a bandwidth corresponding to the PRB, or is used to indicate a frequency range ending at the central frequency point and having a bandwidth corresponding to the PRB;
in response to n being an even number, the information of the frequency range is used to indicate a frequency range taking the central frequency point as a midpoint and having a bandwidth corresponding to the n PRBs; and
in response to n being an odd number greater than 1, the information of the frequency range is used to indicate a frequency range taking the central frequency point as a midpoint and having a bandwidth corresponding to the n PRBs, or is used to indicate a frequency range starting from a frequency point obtained by subtracting a bandwidth corresponding to a certain number of PRBs from the central frequency point and having a bandwidth corresponding to the n PRBs, wherein the certain number is a rounding value of n/2.

13. The method of any one of claims 1 to 12, further comprising:
determining an allowable frequency range corresponding to interference information allowed to be reported according to an indication of the network device;
wherein sending the interference information to the network device comprises:
determining that the frequency range related to the frequency interference problem belongs to the allowable frequency range, and sending the interference information to the network device.

14. A method for determining a frequency range, applied to a network device, comprising:
receiving interference information sent by a terminal, wherein the interference information comprises information of a frequency range related to a frequency interference problem; and
determining the frequency range related to the frequency interference problem of the terminal according to the information of the frequency range.

15. The method of claim 14, wherein the terminal sends the interference information in response to at least one of following conditions being met:
an occurrence of the frequency interference problem;
stopping of the frequency interference problem; or
an occurrence of a new frequency interference problem.

16. The method of claim 14, wherein the information of the frequency range comprises at least one of:
a frequency range where interference occurs; or
a frequency range combination where interference occurs.

17. The method of claim 16, wherein the frequency range combination comprises more than one frequency range and/or frequency.

18. The method of claim 14, wherein the interference information further comprises a radio access technology corresponding to a frequency range where interference occurs.

19. The method of claim 18, wherein the radio access technology comprises at least one of:
a third generation partnership project (3GPP) radio access technology;
a global positioning system (GPS);
a BeiDou system (BDS);
a global navigation satellite system (GNSS);
a wireless local area network (WLAN);
a Galileo positioning system (Galileo);
an Indian regional navigation satellite system (IRNSS); or
bluetooth (BT).

20. The method of claim 14, wherein a type of the information of the frequency range comprises at least one of:
a serial number of a central frequency point and bandwidth information related to the serial number of the central frequency point;
a serial number of a start frequency point and a serial number of an end frequency point;
bandwidth part (BWP) information;
cell information;
cell group information; or
measurement object information.

21. The method of claim 20, wherein the information of the frequency range further carries sub-carrier spacing information corresponding to the frequency range.

22. The method of claim 20, wherein in response to the type comprising at least one of the BWP information, the cell information, the cell group information, or the measurement object information, the information of the frequency range further carries start frequency information and/or end frequency information of the frequency range.

23. The method of claim 22, wherein the start frequency information comprises a serial number of a start frequency point or a serial number of a start physical resource block (PRB); and/or the end frequency information comprises a serial number of an end frequency point or a serial number of an end PRB.

24. The method of claim 20, wherein the bandwidth information comprises at least one of:
a bandwidth; or
a number of PRBs.

25. The method of claim 24, wherein in a case that the bandwidth information comprises a number n of PRBs,
in response to n being equal to 1, the information of the frequency range is used to indicate a frequency range starting from the central frequency point and having a bandwidth corresponding to the PRB, or is used to indicate a frequency range ending at the central frequency point and having a bandwidth corresponding to the PRB;
in response to n being an even number, the information of the frequency range is used to indicate a frequency range taking the central frequency point as a midpoint and having a bandwidth corresponding to the n PRBs; and
in response to n being an odd number greater than 1, the information of the frequency range is used to indicate a frequency range taking the central frequency point as a midpoint and having a bandwidth corresponding to the n PRBs, or is used to indicate that a frequency range starting from a frequency point obtained by subtracting a bandwidth corresponding to a certain number of PRBs from the central frequency point and having a bandwidth corresponding to the n PRBs, wherein the certain number is a rounding value of n/2.

26. The method of any one of claims 14 to 25, further comprising:
indicating an allowable frequency range corresponding to interference information allowed to be reported to the terminal.

27. An apparatus for reporting interference information, applied to a terminal, comprising: a processing module, configured to determine that a condition for sending the interference information is met; and
a sending module, configured to send the interference information to a network device, wherein the interference information comprises information of a frequency range related to a frequency interference problem.

28. An apparatus for determining a frequency range, applied to a network device, comprising:
a receiving module, configured to receive interference information sent by a terminal, wherein the interference information comprises information of a frequency range related to a frequency interference problem; and
a processing module, configured to determine the frequency range related to the frequency interference problem of the terminal according to the information of the frequency range.

29. A communication device, comprising:
a processor; and
a memory configured to store a computer program;
wherein when the computer program is executed by the processor, the method for reporting interference information of any one of claims 1 to 13 is implemented.

30. A communication device, comprising:
a processor; and
a memory configured to store a computer program;
wherein when the computer program is executed by the processor, the method for determining a frequency range of any one of claims 14 to 26 is implemented.

31. A computer-readable storage medium storing a computer program, wherein when the computer program is executed by a processor, the method for reporting interference information of any one of claims 1 to 13 is implemented.

32. A computer-readable storage medium storing a computer program, wherein when the computer program is executed by a processor, the method for determining a frequency range of any one of claims 14 to 26 is implemented.
